# EUROPEAN PATENT SPECIFICATION

(11) **EP 0 793 616 B1**
(45) Date of publication and mention of the grant of the patent: **05.12.2001**
(21) Application number: 95932102.7
(22) Date of filing: 21.09.1995
(51) Int. Cl.: B66C 23/90, G01M 19/00

(54) **WEIGHT TESTING APPARATUS**
VORRICHTUNG ZUR BELASTUNGSPRÜFUNG
APPAREIL D'EPREUVE DE POIDS

(43) Date of publication of application: 10.09.1997
(73) Proprietor: WATER WEIGHTS LIMITED, Bridge of Don Aberdeen Scotland AB23 8JX (GB)
(72) Inventor: CAMPBELL, Melfort, Andrew, Maryculter Aberdeen AB1 0BN (GB)
(74) Representative: West, Alan Harry
(86) International application number: GB9502258
(87) International publication number: WO9711022

(56) References cited:
- EP-A- 0 169 063
- FR-A- 2 296 171
- GB-A- 2 047 414
- GB-A- 2 138 151
- GB-A- 2 262 907
- GB-A- 2 288 668
- US-A- 4 697 458

## Description

This invention relates to weight testing apparatus, and is more particularly concerned with apparatus for testing the lifting strength of hoists, winches, cranes and similar lifting devices.

Traditional weight testing equipment has comprised heavy and bulky weights of metal or concrete having means for attachment to a carrying structure which incorporates a dynamometer or other load measuring meter which indicates the total load borne by the hoist or crane and the inertial stress due to acceleration of the rate of lifting. An alternative is the use of rigid hollow containers which may be filled with water or other liquid for weight testing purposes. However, such testing equipment frequently has to be transported to the test site by road which can cause many problems.

Weight testing apparatus which obviates or at least substantially reduces the problems inherent in transporting or storing bulky and/or heavy equipment and which is easily transportable by air, for example by helicopter to offshore sites, has been described in British Patent Application No. 2047414, for example, and has proved to be of great practical benefit and of considerable commercial success. That apparatus comprises a liquid impervious bag having a top inlet and a bottom outlet for liquid, and means for suspending the bag from a support. The suspending means generally consists of elongate load bearing elements which are flexible and are generally uniformly spaced around the bag so that the bag is uniformly supported against burst forces exerted on it by the weight of liquid, generally water, contained in it.

Such a weight testing bag is usually in the form of a generally pear-shaped envelope of reinforced polyvinyl chloride or neoprene, supported by a plurality of webbing strengthening straps attached to the outer surface of the envelope. Each strap terminates in an eye which is attached to a shackle mounted on a support boss by means of which the bag is suspended from a crane or other lifting device to be tested. In use, the empty bag is attached to the crane or other lifting device and is filled with water through its open top or through an inlet hose. The load may then be measured by means of a load cell or scale or by measuring the amount of water pumped in, for example by means of a flowmeter. Since the capacity of the bag is known, it can be filled to an extent sufficient to provide the required weight test. When the test is complete, the bag can be quickly and easily emptied under gravity and then folded for transportation and storage.

British Patent Application No. 2047414 describes also how more than one bag can be suspended from a single lifting device when heavier weights are required for testing. In one arrangement, bags are suspended one below another by means of a cable extending within a sleeve through the centre of each bag. In another arrangement, a number of bags are suspended from a supporting frame, optionally with other bags suspended below them. However, these bag arrangements occupy a great deal of space since they include substantial volumes of space unoccupied by the weight testing equipment itself. The proposals of European Patent 0169063, in which the upper end of a bag is nested between the lower ends of a number of bags suspended at a higher level, goes some way towards solving that problem but is not entirely satisfactory.

The problem therefore remains that where space is at a premium, for example because the equipment to be tested is insufficient in height to support bags one above another, or insufficiently spaced from adjacent structures to accommodate a number of bags side by side, existing weight testing apparatus may prove unsatisfactory.

The present invention seeks to provide weight testing apparatus comprising fluid impervious bags of the type generally known hitherto, but shaped and structured to accommodate a greater quantity of fluid than previously within a compact volume.

In accordance with the invention, there is now provided weight testing apparatus comprising a liquid impervious bag having a liquid cutlet at the bottom of the bag, a liquid inlet at the top of the bag and means for suspending the bag from a single support, characterised in that the bag comprises a plurality of individual and optionally interconnected compartments forming a multilobed structure.

One form of apparatus constructed in accordance with the invention will now be described in greater detail by way of example only with reference to the accompanying drawings, in which:
Figure 1 is a side perspective view of apparatus according to the invention;
Figure 2 is a horizontal section through the apparatus of Figure 1; and
Figure 3 is a vertical section through the apparatus of Figure 1.

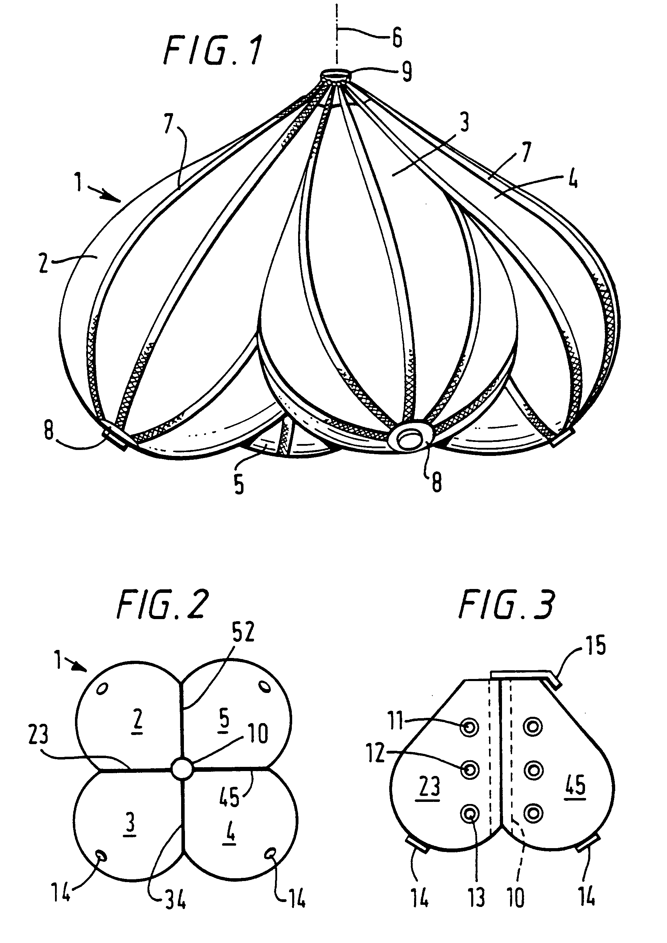

Referring to the drawings and especially to Figure 1, the bag 1 in the example shown has four lobes 2, 3, 4 and 5 each identical in size and shape and equally spaced around the central vertical axis 6 of the bag 1. The bag structure is of PVC-coated polyester and has a plurality of webbing straps 7 passing from a central support 8 on each lobe around the bags to a shackle 9 at their upper ends. The shackle 9 is used to support the bag 1 in the usual manner from the equipment being tested. As can be seen in Figure 1, each of the four lobes is of a generally pear shape, as is conventional with the known weight testing bags of British Patent Application No. 2047414. In this case, however, in order to achieve a more stable and compact configuration than that described in British Patent Application No. 2047414, the four lobes together form in horizontal section a quatrefoil shape with the lobes being separated internally by baffle walls 23, 34, 45 and 52 as shown in Figure 2. That figure shows also that the bag 1 may include a central trunk 10. The webbing straps 7 extending from the central support 8 on each lobe towards the centre of the bag structure may be fastened to that cental trunk 10 or may extend through the cental trunk 10 to the shackle 9. Also, a support cable may extend through the trunk 10 for supporting a further weight testing bag beneath the bag 1. Figure 3 shows two internal baffles 23 and 45, which have water ducts 11, 12 and 13 through them to permit the water levels in the respective lobes to equalise as the bag is filled with water. The baffles 34 and 52 will contain similar ducts. Figure 3 shows also that each lobe has its own dump valve 14 through which water is emptied from the bag. It shows too a filling trunk 15 at the top of the bag through which water is admitted to the bag; that trunk may preferably have a four-way divider to permit all four lobes to be filled simultaneously.

It will be understood that although the bag has been shown with four lobes, it is equally possible to provide 3, 5, 6 or, less preferably, more lobes, as required. Generally, however, 3 to 6 equally sized lobes will be preferred. Also, it should be understood that instead of a single envelope divided by internal baffles into a plurality of compartments, the bag may be constituted by a plurality of individual but identical envelopes each shaped to form a single compartment but interconnected to ensure equal fluid distribution in use. Thus, in the four-lobed quatrefoil bag shown in the drawings, each lobe may be constituted by a separate envelope having in horizontal section an outer arcuate wall and two plane walls which will abut the plane walls of adjacent lobes. Such an arrangement will necessarily have far greater stability than the multibag arrangement shown and described in British Patent Application No. 2047414.

Weight testing bags according to the invention may have a size and capacity to accommodate up to 100 tonnes or more water within a compact shape, for example a maximum height of approximately 6 metres and a maximum width of 8 metres or less.

## Claims

1. Weight testing apparatus comprising a liquid impervious bag (1) having a liquid inlet at the top of the bag (15) and a liquid outlet at the bottom of the bag (14) and means (7,9) for suspending the bag from a single support, **characterised in that** the bag comprises a plurality of individual compartments (2,3,4,5) forming a multilobed structure.

2. Apparatus according to claim 1, wherein the compartments are interconnected by ducts (11,12,13) which allow substantially uniform filling and emptying of the bag (1).

3. Apparatus according to claim 1 or claim 2, wherein the compartments are of similar size and shape.

4. Apparatus according to any preceding claim, wherein each compartment has an outer arcuate wall and two plane walls (45,34,23,52) which abut adjacent compartments.

5. Apparatus according to any preceding claim, wherein the bag includes a plurality of scraps (7) passing from a central support (8) on each lobe around the bag to a shackle (9) at the bag's upper end.

6. Apparatus according to any preceding claim, wherein the bag includes means (10) from which additional bags may be suspended.

## Patentansprüche

1. Gewichts-Testvorrichtung mit einem flüssigkeitsundurchlässigen Sack (1), der an der Spitze einen Flüssigkeitseinlaß (15) und am Boden einen Flüssigkeitsauslaß (14) aufweist, und einer Einrichtung (7, 9) zum Aufhängen des Sacks an einem einzigen Halter, **dadurch gekennzeichnet, daß** der Sack eine Mehrzahl individueller Kammern (2, 3, 4, 5) aufweist, die eine mehrlappige Struktur bilden.

2. Vorrichtung nach Anspruch 1, wobei die Kammern durch Leitungen (11, 12, 13) verbunden sind, die ein im wesentlichen gleichförmiges Füllen und Entleeren des Sacks (1) erlauben.

3. Vorrichtung nach Anspruch 1 oder 2, wobei die Kammern ähnlich in Größe und Form sind.

4. Vorrichtung nach einem der vorstehenden Ansprüche, wobei jede Kammer eine gekrümmte Außenwand und zwei ebene, an die angrenzenden Kammern anstoßende Wände (45, 34, 23, 52) aufweist.

5. Vorrichtung nach einem der vorstehenden Ansprüche, wobei der Sack eine Mehrzahl von Gurten (7) aufweist, die von einem zentralen Halter (8) an jedem Lappen um den Sack zu einem Schäkel (9) am oberen Ende des Sacks laufen.

6. Vorrichtung nach einem der vorstehenden Ansprüche, wobei der Sack eine Einrichtung (10) aufweist, an der weitere Säcke aufgehängt werden können.

## Revendications

1. Appareil de contrôle de charge comprenant un sac (1) imperméable au liquide et pourvu d'une entrée de liquide (15), dans sa partie supérieure, et d'une sortie de liquide (14), au fond, et des moyens (7, 9) pour suspendre le sac à un support unique, **caractérisé en ce que** le sac comprend plusieurs compartiments individuels (2, 3, 4, 5) qui forment une structure multilobée.

2. Appareil selon la revendication 1, dans lequel les compartiments sont reliés entre eux par des conduits (11, 12, 13) qui permettent un remplissage et une évacuation sensiblement uniformes du sac (1).

3. Appareil selon la revendication 1 ou 2, dans lequel les compartiments ont des tailles et des formes similaires.

4. Appareil selon l'une quelconque des revendications précédentes, dans lequel chaque compartiment a une paroi arquée extérieure et deux parois planes (45, 34, 23, 52) qui sont appliquées contre les compartiments voisins.

5. Appareil selon l'une quelconque des revendications précédentes, dans lequel le sac comprend plusieurs attaches (7) qui s'étendent d'un support central (8) prévu sur chaque lobe, autour du sac, à un oeil porte-charge (9) prévu à l'extrémité supérieure du sac.

6. Appareil selon l'une quelconque des revendications précédentes, dans lequel le sac comprend des moyens (10) auxquels des sacs supplémentaires peuvent être suspendus.
